# EUROPEAN PATENT APPLICATION

(11) **EP 4 806 870 A1**
(43) Date of publication of application: **16.09.2026**
(21) Application number: 26163376.2
(22) Date of filing: 09.03.2026
(51) Int. Cl.: C04B 41/00, C04B 41/50, C04B 41/52, C04B 41/87, C04B 41/89

(54) **MULTILAYER ENVIRONMENTAL BARRIER COATING**

(30) Priority: 11.03.2025 US 202519076600
(71) Applicant: RTX Corporation, Farmington, CT 06032 (US)
(72) Inventor: KENNEDY, Zachary, Hamden, 06514 (US); BEALS, James T., West Hartford, 06107 (US); JACKSON III, Richard Wesley, Mystic, 06355 (US); TANG, Xia, West Hartford, 06107 (US)
(74) Representative: Dehns

(57) **Abstract**

Environmental barrier coatings (EBCs) comprising a bond coat (520) and a top coat (530) are disclosed. An EBC bond coat (520), an EBC top coat (530), or both coats may comprise (i) one or more transition metal silicate having an initial particle size that is coarse ("coarse TM silicate") (580) and (ii) one or more transition metal silicate having an initial particle size that is fine ("fine TM silicate") (590). Fine TM silicate (590) may partially or completely plate one or more coarse TM silicate particles (580). Methods of producing such EBCs are disclosed.

## Description

### FIELD OF THE INVENTION

The subject matter disclosed herein relates to coatings used in high temperature environments, and, in particular, relates to environmental barrier coatings for silicon-based ceramic matrix composite substrates.

### BACKGROUND OF THE INVENTION

Turbomachinery, such as gas turbine engines, have components (including, as non-limiting examples, turbine blades, turbine vanes, blade outer air seals (BOAS), BOAS segments, other seals, vane airfoils and platforms therefor, blade airfoils and platforms therefor, and combustor liners) that are exposed to hostile environments due to, for example, high temperatures, corrosive and oxidative conditions, and elevated stress levels. It is desirable that such components be made of heat-resistant materials such as ceramic matrix composites (CMCs). While CMC materials can withstand high operating temperatures, CMC components are susceptible to erosion/degradation due to exposure to the high temperatures and corrosive agents (e.g., water vapor) associated with the high-energy, high temperature gas flow from the combustion section of the turbomachinery.

Substrates containing silicon, such as silicon-containing metal alloys and silicon-containing CMC materials can contain SiC. Exposure of SiC to oxygen can result in the SiC reacting with O₂ to form silica (SiO₂). If high temperature water vapor is present, then the silica can react with H₂O to form gaseous reaction products such as Si(OH)₄. This process results in volatilization of Si from the SiC material causing erosion/degradation of the silicon-containing component, e.g., the silicon-containing CMC component. For these reasons, silicon-containing components, such as silicon-containing CMC components, can be provided with coatings to enhance their ability to withstand high temperatures and to protect the underlying substrates from the corrosive agents such as water vapor present in the high-energy, high temperature gas flow.

For example, jet engine components having a CMC substrate can be provided with environmental barrier coatings (EBCs) applied to the surface thereof to protect the substrate from corrosive forces due to, for example, exposure to high temperature water vapor. As other non-limiting examples, other substrates, such as monolithic ceramic substrates (e.g., silicon-containing monolithic ceramic substrates), metal substrates (e.g., silicon-containing metal substrates), metal alloy substrates (e.g., silicon-containing metal alloy substrates), and the other silicon-containing substrates, can be provided with EBCs. EBC coatings can be made of materials that are resistant to the corrosive gases such as water vapor present in the high-energy, high temperature gas flow. EBCs can increase the durability of components, such as hot-section components.

EBCs can protect underlying CMCs from water steam erosion and calcium-magnesium-alumino-silicate ("CMAS"; e.g., CaO-MgO-Al₂O₃-SiO₂) attack, such as CMAS deposits. For example, EBCs may provide a dense and at least partially hermetic seal for CMC materials reducing exposure of the surface and interior (via penetration through pores and cracks) to high temperature water vapor, corrosive species such as CMAS, and the like. Thus, EBCs may reduce degradation of CMCs and extend the operational lifespan of components made therefrom.

However, during operation of turbomachinery, such as gas turbine engines, comprising EBCs, CMAS deposits usually form and accumulate on the EBCs. If the operating temperature of the turbomachinery is greater than the CMAS melting point (approximately 1,180°C - 1,260°C, such as about 1,204°C (about 2,200°F)), the CMAS can transform into a glass phase. The resultant glass phase can readily infiltrate and react with the EBC. The ongoing glass phase reaction with EBC can cause the EBC to dissolve. Dissolving can impact the mechanical integrity of the EBC and leads to EBC loss. Eventually, the CMC substrate can be attacked by water steam and CMAS.

There exists a continuing need for materials, methods, and techniques for producing EBCs that have improved ability to withstand CMAS attack during operation of turbomachinery, such as gas turbine engines.

### SUMMARY OF THE INVENTION

The present disclosure is directed, in a first aspect, to a multilayer environmental barrier coating, comprising: a bond coat and a top coat; wherein (i) at least one portion of the bond coat, (ii) at least one portion of the top coat, or (iii) at least one portion of each of the bond coat and the top coat comprises one or more fine transition metal silicate and one or more coarse transition metal silicate; and in at least one portion wherein both fine transition metal silicate and coarse transition metal silicate are present, the fine transition metal silicate forms a partial or complete plate on at least one particle of the coarse transition metal silicate..

In further examples of the present disclosure, including further examples of the above, (i) at least one portion of the bond coat and (ii) at least one portion of the top coat each comprises one or more fine transition metal silicate and one or more coarse transition metal silicate.

In further examples of the present disclosure, including further examples of the above, (i) a ratio of an initial volume % of particles of the fine transition metal silicate to an initial volume % of particles of the coarse transition metal silicate is from 2:1 to 1:2 in at least one portion of the bond coat; (ii) a ratio of an initial volume % of particles of the fine transition metal silicate to an initial volume % of particles of the coarse transition metal silicate is from 12:1 to 7:1 in at least one portion of the top coat; or (iii) both (i) and (ii).

In further examples of the present disclosure, including further examples of the above, (i) an initial particle size of the fine transition metal silicate is 0.7 µm to 1.3 µm, (ii) an initial particle size of the coarse transition metal silicate is 5 µm to 115 µm, or (iii) both (i) and (ii).

In further examples of the present disclosure, including further examples of the above, (i) the fine transition metal silicate comprises HfSiO₄, (ii) the coarse transition metal silicate comprises ZrSiO₄, or (iii) both (i) and (ii).

In further examples of the present disclosure, including further examples of the above, the bond coat further comprises one or more of the following additives: Sc, Y, Yb, Al, Mg, Ba, Ca, B, Na, one or more Lanthanide, and one or more Actinide.

In further examples of the present disclosure, including further examples of the above, (i) the bond coat is 7 mils (0.18 mm) to 13 mils (0.33 mm) thick, (ii) the top coat is 2 mils (0.05 mm) to 6 mils (0.15 mm) thick, or (iii) both (i) and (ii).

In further examples of the present disclosure, including further examples of the above, the bond coat coats a ceramic matrix composite component.

In another aspect, the present disclosure is directed to a method for making a multilayer environmental barrier coating system, the method comprising: providing a substrate; providing a bond coat and a top coat, wherein (i) at least one portion of the bond coat, (ii) at least one portion of the top coat, or (iii) at least one portion of each of the bond coat and the top coat comprises one or more fine transition metal silicate and one or more coarse transition metal silicate; depositing the bond coat on the substrate; depositing the top coat on the bond coat; and sintering the substrate, the bond coat, and the top coat; wherein the sintering causes one or more particles of the fine transition metal silicate to partially or completely plate at least one particle of the coarse transition metal silicate..

In further examples of the present disclosure, including further examples of the above, the sintering comprises (i) heating the substrate, the bond coat, and the top coat to a temperature of 1,260°C to 1,593°C; (ii) maintaining the top layer, the bond layer, and the substrate to a temperature of 1,260°C to 1,593°C for at least one hour; or (iii) both (i) and (ii).

In further examples of the present disclosure, including further examples of the above, (i) at least one portion of the bond coat and (ii) at least one portion of the top coat each comprises one or more fine transition metal silicate and one or more coarse transition metal silicate.

In further examples of the present disclosure, including further examples of the above, (i) the coarse transition metal silicate is provided in only a topmost one third (1/3) to one quarter (1/4) of a total thickness of the bond coat, (ii) the coarse transition metal silicate is provided in only a topmost one third (1/3) to one quarter (1/4) of a total thickness of the top coat, or (iii) both (i) and (ii).

In further examples of the present disclosure, including further examples of the above, (i) a ratio of an initial volume % of particles of the fine transition metal silicate to an initial volume % of particles of the coarse transition metal silicate is from 2:1 to 1:2 in at least one portion of the bond coat; (ii) a ratio of an initial volume % of particles of the fine transition metal silicate to an initial volume % of particles of the coarse transition metal silicate is from 12:1 to 7:1 in at least one portion of the top coat; or (iii) both (i) and (ii).

In further examples of the present disclosure, including further examples of the above, (i) an initial particle size of the fine transition metal silicate is 0.7 µm to 1.3 µm, (ii) an initial particle size of the coarse transition metal silicate is 5 µm to 115 µm, or (iii) both (i) and (ii).

In further examples of the present disclosure, including further examples of the above, (i) the fine transition metal silicate comprises HfSiO₄, (ii) the coarse transition metal silicate comprises ZrSiO₄, or (iii) both (i) and (ii).

In further examples of the present disclosure, including further examples of the above, the bond coat further comprises one or more of the following additives: Sc, Y, Yb, Al, Mg, Ba, Ca, B, Na, one or more Lanthanide, and one or more Actinide.

In further examples of the present disclosure, including further examples of the above, (i) the bond coat is 7 mils (0.18 mm) to 13 mils (0.33 mm) thick, (ii) the top coat is 2 mils (0.05 mm) to 6 mils (0.15 mm) thick, or (iii) both (i) and (ii).

In further examples of the present disclosure, including further examples of the above, the substrate comprises a ceramic matrix composite component.

In yet another aspect, which the Applicant expressly reserves the right to claim independently, the present disclosure is directed to a multilayer environmental barrier coating system comprising: a ceramic matrix composite component coated by a bond coat and the bond coat coated by a top coat; wherein (i) at least one portion of the bond coat, (ii) at least one portion of the top coat, or (iii) at least one portion of each of the bond coat and the top coat comprises one or more fine transition metal silicate and one or more coarse transition metal silicate; and in at least one portion wherein both the fine transition metal silicate and the coarse transition metal silicate are present, the fine transition metal silicate forms a partial or complete plate on at least one particle of the coarse transition metal silicate; wherein the multilayer environmental barrier coating system is produced by a process comprising: providing a ceramic matrix composite component; depositing a bond coat on the component; depositing a top coat on the bond coat; and sintering the component, the bond coat, and the top coat, at a temperature and for a time, wherein the temperature and the time are together sufficient to cause the fine transition metal silicate to partially or completely plate at least one particle of the coarse transition metal silicate..

In further examples of the present disclosure, including further examples of the above, (a) as deposited, the bond coat comprises by volume % one or more of (i) 20% to 70% SiC particles, (ii) 15% to 30% SiO₂, (iii) 1% to 10% glass, (iv) 0.5% to 10% of one or more additive, (v) 5% to 25% fine transition metal silicate particles, (vi) 0% to 20% coarse transition metal silicate particles, or (vii) any combination of (i)-(vi); (b) as deposited, the top coat comprises by volume % (i) 80% to 100% fine transition metal silicate particles, (ii) 0% to 20% coarse transition metal silicate particles, or (iii) both (i) and (ii); or (c) both (a) and (b).

In further examples of the present disclosure, including further examples of the above, (i) the fine transition metal silicate particles comprise HfSiO₄, (ii) the coarse transition metal silicate particles comprise ZrSiO₄, or (iii) both (i) and (ii).

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 is a schematic illustration depicting an exemplary embodiment of an exemplary multilayer environmental barrier coating system.
FIG. 2 is a schematic illustration depicting an exemplary embodiment of an exemplary multilayer environmental barrier coating system.
FIG. 3 is a schematic illustration depicting an exemplary embodiment of an exemplary EBC coat comprising fine TM silicate particles and a coarse TM silicate particle. In arrangement 300, fine TM silicate particles and coarse TM silicate particle are separate. In arrangement 300', fine TM silicate particles plate the coarse TM silicate particle.
FIG. 4 is a schematic illustration depicting an exemplary embodiment of an exemplary multilayer environmental barrier coating system.
FIG. 5 is a schematic illustration depicting an exemplary embodiment of an exemplary multilayer environmental barrier coating system.
FIG. 6 is a flowchart illustrating an exemplary method of fabricating a multilayer environmental barrier coating system.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or that would otherwise be appreciated by one of skill in the art. It is to be understood that all concentrations disclosed herein are by volume percent (volume %.) based on a total volume of the composition unless otherwise indicated.

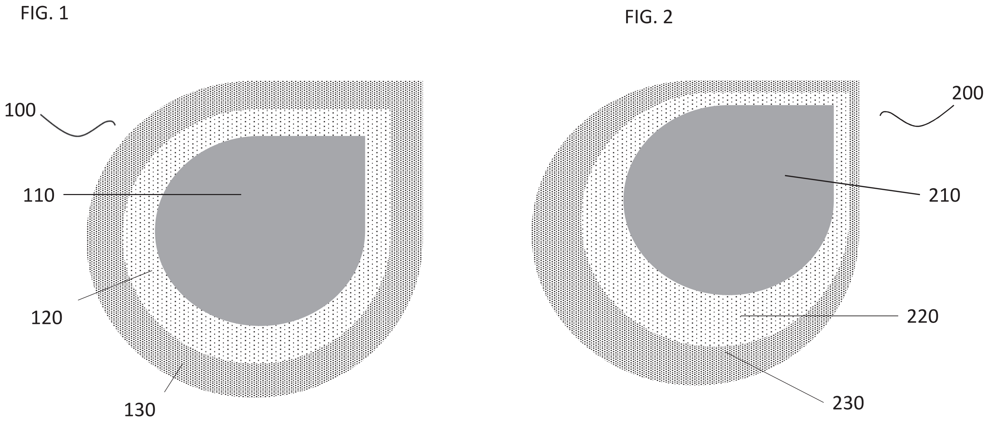

EBC systems may be multilayered structures. For example, an EBC system can comprise a bond coat deposited on one or more region of an outer surface of a substrate and a top coat deposited on a one or more region of a topmost surface of the bond coat. For example, as shown schematically in FIG. 1, an EBC system 100 can comprise bond coat 120 deposited on an outer surface of substrate 110 and top coat 130 deposited on a topmost surface of bond coat 120. EBC system 100 should be understood to exist in three dimensions, and FIG. 1 should be understood to be a cross section of EBC system 100. EBC system 100 illustrates an exemplary EBC system in which the entirety of the outer surface of substrate 110 is coated with bond coat 120 having a first uniform thickness, and in which the entirety of the topmost surface of bond coat 120 is coated with top coat 130 having a second uniform thickness. As shown in FIG. 2, which schematically illustrates a cross section of exemplary three dimensional EBC system 200, the first thickness and the second thickness can be the same or different and can vary independently of each other in various regions. EBC system 200 illustrates an exemplary EBC system in which the entirety of the outer surface of substrate 210 is coated with bond coat 220 having a varying thickness, and in which the entirety of the topmost surface of bond coat 220 is coated with top coat 230 having a varying thickness. As used herein, the terms "topmost", "outermost", and/or the like may refer to a coat, a layer, a portion, a region, and/or the like that is farthest from a substrate relative to one or more other coat, layer, portion, region, and/or the like. As used herein, the terms "bottommost", "innermost", and/or the like may refer to a coat, a layer, a portion, a region, and/or the like that is closest to a substrate relative to one or more other coat, layer, portion, region, and/or the like.

An EBC system substrate (which may also be referred to as a "substrate") may comprise one or more silicon-containing material and may form, as a non-limiting example, a turbomachinery component. A substrate may comprise, as non-limiting examples, one or more CMC, one or more monolithic ceramic, one or more other ceramic, one or more metal, one or more metal alloy, or combinations thereof. Substrates may comprise silicon-containing materials, such as, for example, one or more silicon-containing CMC, one or more silicon-containing monolithic ceramic, one or more other silicon-containing ceramic, one or more silicon-containing metal, one or more silicon-containing metal alloy, individually or combinations thereof.

An EBC bond coat (which may also be referred to as a "bond coat") may be employed to promote adhesion of an EBC system to a substrate, e.g., a CMC substrate. An EBC bond coat can be made from a variety of materials or mixtures of materials. The bond coat can, for example, comprise a Si-containing material, such as silicon, silicon carbide, silicon dioxide, silicates, and/or silicides. As an example, the bond coat can comprise a composite bond coat comprising silicon carbide, silicon dioxide, transition metal ("TM") silicates, glass, and/or oxides. The bond coat can comprise, one or more Si-containing material, for example one or more SiO₂-based silicate glass. The Si-containing material, such as a SiO₂-based silicate glass, may also optionally comprise one or more additives such as Sc, Y, Al, Mg, Ba, Ca, B, Na, one or more Lanthanide, such as Yb, one or more Actinide, individually or combinations thereof.

An EBC top coat (which may also be referred to as a "top coat") can be made from a variety of materials or mixtures of materials. As one example, an EBC top coat may comprise one or more transition metal ("TM") silicate.

As discussed hereinbelow, mixing between the bond coat and the top coat may occur during, e.g., fabrication and/or operation. Accordingly, the composition of a bond coat may change during fabrication and/or operation. For example, where a coat, e.g., a bond coat, comprises glass, at sintering temperature, at least a portion of this glass may become liquid and a portion thereof may flow into the other coat, e.g., a top coat. Such mixing may produce, for example, gradients of components and/or may produce localities with components that may be different from surrounding areas.

In accordance with the present disclosure, an EBC bond coat, an EBC top coat, or both can comprise one or more TM silicate. In embodiments, an EBC bond coat, an EBC top coat, or both coats can comprise (i) one or more TM silicate having an initial particle size that is coarse and/or (ii) one or more TM silicate having an initial particle size that is fine. In embodiments, an EBC bond coat, an EBC top coat, or both coats can comprise both (i) one or more TM silicate having an initial particle size that is coarse and (ii) one or more TM silicate having an initial particle size that is fine. A "TM silicate having an initial particle size that is coarse" may be understood to have a relatively larger initial particle size as compared to an initial particle size of a "TM silicate having an initial particle size that is fine". A "TM silicate having an initial particle size that is coarse" may be referred to as a "coarse TM silicate". A "TM silicate having an initial particle size that is fine" may be referred to as a "fine TM silicate". An "initial" particle size may refer to size of particles at ambient temperatures, before heat is applied, before sintering, or the like.

An EBC may be fabricated, as a non-limiting example, by depositing one or more layer of slurry containing bond coat components onto a substrate, optionally drying between deposition of each of the one or more bond coat layers, and depositing one or more layer of slurry containing top coat components onto the topmost bond coat layer, again, optionally drying between deposition of each of the one or more top coat layers. The layers may optionally comprise different components from one another.

As non-limiting examples, one or more layer of a bond coat may initially comprise, by volume %, one or more of (i) approximately 20% to approximately 70% (such as approximately 15% to approximately 75%, approximately 20% to approximately 70% approximately 25% to approximately 65%, approximately 30% to approximately 60%, approximately 35% to approximately 55%, approximately 40% to approximately 50%, or approximately 55%) SiC particles, which may optionally be between approximately 5µm to approximately 100µm (such as approximately 1µm to approximately 110µm, approximately 5µm to approximately 100µm, approximately 10µm to approximately 90µm, approximately 15µm to approximately 85µm, approximately 20µm to approximately 80µm, approximately 25µm to approximately 75µm, approximately 30µm to approximately 70µm, approximately 35µm to approximately 65µm, approximately 40µm to approximately 60µm, approximately 45µm to approximately 55µm, or approximately 50µm) in size; (ii) approximately 15% to approximately 30% (such as approximately 10% to approximately 35%, approximately 15% to approximately 30%, approximately 20% to approximately 25%, or approximately 22% to approximately 23%) SiO₂; (iii) approximately 1% to approximately 10% (such as approximately 0.5% to approximately 10.5%, approximately 1% to approximately 10%, approximately 1.5% to approximately 9.5%, approximately 2% to approximately 9%, approximately 2.5% to approximately 8.5%, approximately 3% to approximately 7%, approximately 3.5% to approximately 6.5%, approximately 4% to approximately 6%, approximately 4.5% to approximately 5.5%, approximately 4% to approximately 5%, or approximately 4.5%) glass; (iv) approximately 0.5% to approximately 10% (such as approximately 0.1% to approximately 15%, approximately 0.2% to approximately 14%, approximately 0.3% to approximately 13%, approximately 0.4% to approximately 14%, approximately 0.5% to approximately 13%, approximately 0.6% to approximately 13%, approximately 7% to approximately 12%, approximately 0.8% to approximately 11%, approximately 0.9% to approximately 10%, approximately 1% to approximately 9%, approximately 2% to approximately 8%, approximately 3% to approximately 7%, approximately 4% to approximately 6%, or approximately 5% ) of one or more additives (where the percentages given may be the total volume % of all additives or may be the volume % of each additive; where more than one additive is present, the volume % of each may be individually determined (in other words, the volume % of one additive need not depend on or vary with the volume % of another additive)); (v) approximately 5% to approximately 25% (such as approximately 2.5% to approximately 30%, approximately 5% to approximately 25%, approximately 10% to approximately 20%, or approximately 15%) fine TM silicate particles (such as HfSiO₄ particles); (vi) approximately 0% to approximately 20% (such as approximately 0% to approximately 25%, approximately 2% to approximately 20%, approximately 5% to approximately 15%, or approximately 10%) coarse TM silicate particles (such as ZrSiO₄ particles); or (vii) any combination of (i)-(vi). It should be noted that the provided percentages are exemplary only, that one or more of the named components may be omitted in one or more layer of a bond coat (in other words, the components are optional, independently of one another), and that additional components may be present in one or more layer of a bond coat. "Initially" comprising may refer to a composition of a layer at ambient temperatures, before heat is applied, before sintering, or the like.

As non-limiting examples, one or more layer of a top coat may initially comprise, by volume % (i) approximately 80% to approximately 100% (such as approximately 75% to approximately 100%, approximately 80% to approximately 100%, approximately 82% to approximately 98%, approximately 85% to approximately 95%, or approximately 90%) fine TM silicate particles (such as HfSiO₄ particles) and (ii) approximately 0% to approximately 20% (such as approximately 0% to approximately 25%, approximately 0% to approximately 20%, approximately 2% to approximately 18%, approximately 5% to approximately 15%, or approximately 10%) coarse TM silicate particles (such as ZrSiO₄ particles). It should be noted that the provided percentages are exemplary only, that one or more of the named components may be omitted in one or more layer of a top coat (in other words, the components are optional, independently of one another), and that additional components may be present in one or more layer of a top coat. "Initially" comprising may refer to a composition of a layer at ambient temperatures, before heat is applied, before sintering, or the like.

It should be understood that the sum of the components in any given layer (of a bond coat and/or a top coat) will be equal to 100 volume %; however, components other than those named may be present, so that the percentages of named components need not equal 100 volume %. Where a composition of one or more layers of a bond coat, a top coat, or both is set forth in terms of volume percentages of some but not all specified components, it should be understood that, where the volume percentages of these specified components do not add up to 100 volume %, the remaining volume percent may comprise one or more of the components named herein or may comprise another component entirely. As a specific non-limiting example intended only to illustrate this concept, a bond coat may comprise (i) approximately 22% SiO₂, (ii) approximately 8% glass, (iii) approximately 20% HfSiO₄, (iii) approximately 2% ZrSiO₄, (iv) and the "remainder" SiC; in such a composition, one of ordinary skill in the art would understand that the bond coat comprises approximately 48% SiC. As another specific non-limiting example intended only to illustrate this concept, a bond coat may comprise (i) approximately 40% SiC, (ii) approximately 22% SiO₂, (iii) approximately 8% glass, (iv) approximately 20% HfSiO₄, and (v) approximately 2% ZrSiO₄; in such a composition, one of ordinary skill in the art would understand that the bond coat comprises approximately 8% unnamed components.

Further, it should also be understood that unintended components may optionally be present in the form of impurities. Optionally, each impurity may be present in an amount, by volume %, of less than approximately 0.25%, less than approximately 0.20%, less than approximately 0.15%, less than approximately 0.10%, or less than approximately 0.05%. If more than one impurity is present, the total of impurities may be present in an amount, by volume %, of less than approximately 0.75%, less than approximately 0.70%, less than approximately 0.65%, less than approximately 0.60%, less than approximately 0.55%, less than approximately 0.50%, less than approximately 0.45%, less than approximately 0.40%, less than approximately 0.35%, less than approximately 0.30%; less than approximately 0.25%, less than approximately 0.20%, less than approximately 0.15%, less than approximately 0.10%, or less than approximately 0.05%.

During fabrication, during operation, or both, components of one layer may mix together with the components of one or more other layer to various degrees. As a non-limiting example, during a process of fabrication via layer deposition, components of one or more later-deposited layer may, for example, fill pores in one or more earlier-deposited layer. As another non-limiting example, components of various layers may undergo mixing, to various degrees, during sintering and/or during operation. Such mixing may occur, for example, between two or more layers of a top coat, between two or more layers of a bond coat, between one or more layers of a top coat and one or more layer of a bond coat, or combinations thereof. Accordingly, during fabrication, during operation, or both, components of an EBC top coat and components EBC bond coat may mix together to various degrees. For example, where a coat, e.g., a bond coat, comprises glass, at sintering temperature, at least a portion of this glass may become liquid and a portion thereof may flow into the other coat, e.g., a top coat. Such mixing may produce, for example, gradients of components and/or may produce localities with components that may be different from surrounding areas.

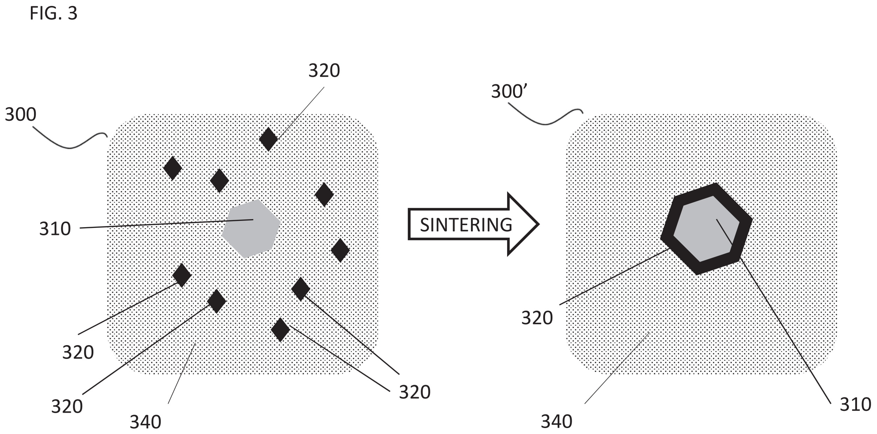

In FIG. 3, exemplary schematic arrangement 300 shows a cross section of a region of an EBC coat 340 before sintering. EBC coat 340 comprises a particle 310 of a coarse TM silicate and particles 320 of a fine TM silicate. EBC coat 340 may be a bond coat or a top coat. Fine TM silicate particles may have a higher solubility in glass than coarse TM silicate particles. When the particles in arrangement 300 are being sintered, fine TM silicate particles may dissolve in glass and precipitate onto coarse TM silicate particles forming an arrangement such as that illustrated schematically in exemplary arrangement 300'; in other words, during sintering, fine TM silicate may plate coarse TM silicate particles. Fine TM silicate may plate the entirety or one or more regions of one or more coarse TM silicate particles. "Plate", "plating", "form a plate on", and the like may refer to fine TM silicate precipitating out of molten glass and forming a partial or complete coating on the surface of coarse TM silicate particles. Arrangement 300' of FIG. 3 is a schematic cross section; it should be understood that the TM silicates exist in three dimensions and that an exemplary coarse TM silicate particle may be plated by fine TM silicate on the entirety or at least part of its surface in all three dimensions. Such plating may occur at temperatures of approximately 1,260°C to approximately 1,593°C, such as approximately 1,316°C to approximately 1,538°C, approximately 1,371°C to approximately 1,482°C, or approximately 1,399°C to approximately 1,454°C (approximately 2,300°F to approximately 2,900°F, such as approximately 2,400°F to approximately 2,800°F, approximately 2,500°F to approximately 2,700°F, or approximately 2,550°F to approximately 2,650°F). Such temperatures may be achieved by, e.g., sintering. Accordingly, the plating may be achieved by sintering arrangement 300 to approximately 1,260°C to approximately 1,593°C, such as approximately 1,316°C to approximately 1,538°C, approximately 1,371°C to approximately 1,482°C, or approximately 1,399°C to approximately 1,454°C (approximately 2,300°F to approximately 2,900°F, such as approximately 2,400°F to approximately 2,800°F, approximately 2,500°F to approximately 2,700°F, or approximately 2,550°F to approximately 2,650°F) to result in arrangement 300'. Such temperatures may be maintained for at least approximately 0.5 hours to at least approximately 1.5 hours, at least approximately 0.6 hours to at least approximately 1.4 hours, at least approximately 0.7 hours to at least approximately 1.3 hours, at least approximately 0.8 hours to at least approximately 1.2 hours, at least approximately 0.7 hours to at least approximately 1.1 hours, or at least approximately 1 hour. Plating of the coarse TM silicate particles by the fine TM silicate may occur in the presence of glass. Before sintering, the top coat may not comprise glass; during sintering, glass may flow from the bond coat into the top coat. The plating may occur in both top and bond coats, even if glass is not initially included in the top coat composition.

Without wanting to be bound by theory, plating may occur via a spontaneous process due to the thermodynamic favorability of larger particles as compared to smaller particles. In accordance with this thermodynamic favorability, fine TM silicate particles may dissolve in glass and plate large TM silicate particles to form larger particles. The degree of plating, e.g., the thickness of fine TM silicate coating coarse TM silicate particles, may increase over time. Again without wanting to be bound by theory, plating of coarse TM silicate particles may be more favorable than plating of other components, such as SiC particles, because coarse TM silicate particles and fine TM silicate particles may possess compatible, or matching, crystallographic structures.

In a bond coat, a ratio of initial volume % of particles of fine TM silicate to volume % of particles of coarse TM silicate (volume % fine TM silicate:volume % coarse TM silicate) may be approximately 1:1, approximately 2:1, or approximately 1:2, such as approximately 2:1 to approximately 1:2, approximately 3:2 to approximately 2:3, approximately 4:3 to approximately 3:4, approximately 5:4 to approximately 4:5, or approximately 6:5 to approximately 5:6. In a top coat, a ratio of initial volume % of particles of fine TM silicate to volume % of particles of coarse TM silicate (volume % fine TM silicate:volume % coarse TM silicate) may be approximately 9:1, such as approximately 10:1 to approximately 8:1, approximately 11:1 to approximately 7:1, or approximately 12:1 to approximately 7:1.

A fine TM silicate may have an initial particle size of approximately 1 µm, such as approximately 0.5 µm to approximately 1.1 µm, approximately 0.6 µm to approximately 1.2 µm, approximately 0.7 µm to approximately 1.3 µm, 0.8 µm to approximately 1.2 µm, 0.9 µm to approximately 1.1 µm, or approximately 0.95 µm to approximately 1.05 µm.

A coarse TM silicate may have an initial particle size of approximately 55 µm, such as approximately 5 µm to approximately 115 µm, approximately 10 µm to approximately 100 µm, approximately 15 µm to approximately 95 µm, approximately 20 µm to approximately 90 µm, approximately 25 µm to approximately 85 µm, approximately 30 µm to approximately 80 µm, approximately 35 µm to approximately 75 µm, approximately 40 µm to approximately 70 µm, approximately 45 µm to approximately 65 µm, or approximately 50 µm to approximately 60 µm. As a non-limiting example, fine TM silicate particles may comprise HfSiO₄. As a non-limiting example, coarse TM silicate particles may comprise ZrSiO₄.

The total thickness of a bond coat may be approximately 10 mils (0.25 mm) thick, such as approximately 7 to approximately 13 mils (0.18 to 0.33 m) thick, approximately 8 to approximately 12 mils (0.20 to 0.30 mm) thick, approximately 9 to approximately 11 mils (0.23 to 0.28 mm) thick, or approximately 9.5 to approximately 10.5 mils (0.24 to 0.27 mm) thick.

The total thickness of a top coat may be approximately 4 mils (0.10 mm) thick, such as approximately 0.5 to approximately 8 mils (0.01 to 0.20 mm) thick, approximately 1 to approximately 7 mils (0.03 to 0.18 mm) thick, approximately 2 to approximately 6 mils thick (0.05 to 0.15 mm), or approximately 3 to approximately 5 mils (0.08 to 0.13 mm) thick.

As discussed herein, mixing between a bond coat and a top coat may occur during, e.g., fabrication and/or operation. Accordingly, the composition of a bond coat and/or a top coat may change during fabrication and/or operation, and the coats may flow into each other to varying degrees; for example, one or more gradient of one or more component may be formed by flowing, and/or flowing may produce localities with components that may be different from surrounding areas. For example, where a coat, e.g., a bond coat, comprises glass, at sintering temperature, at least a portion of this glass may become liquid and a portion thereof may flow into the other coat, e.g., a top coat. Despite various degrees of mixing between bond coat and top coat, there may still exist an interface between bond coat and top coat, which interface may be subject to interfacial failure. For convenience of description, identification, and/or the like, (i) a "top coat" may be considered to be the topmost approximately 4 mils (0.10 mm) of an EBC, such as the topmost approximately 0.5 to approximately 8 mils (0.01 to 0.20 mm), the topmost approximately 1 to approximately 7 mils (0.03 to 0.18 mm), the topmost approximately 2 to approximately 6 mils (0.05 to 0.15 mm), or the topmost approximately 3 to approximately 5 mils (0.08 to 0.13 mm), and/or (ii) a "bond coat" may be considered to be the bottommost approximately 10 mils (0.25 mm) of an EBC, such as the bottommost approximately 7 to approximately 13 mils (0.18 mm to 0.33 mm), the bottommost approximately 8 to approximately 12 mils (0.20 to 0.30 mm), the bottommost approximately 9 to approximately 11 mils (0.23 to 0.28 mm), or the bottommost approximately 9.5 to approximately 10.5 mils (0.24 to 0.27 mm).

Either or both of the bond coat and/or the top coat may optionally initially be comprised of one or more layers, which may be referred to as "portions", overlying one another. Portions that overlie each other may also be described as "coating one another" or "layered atop one another"; and such arrangements may be achieved by, for example, depositing one portion atop another during fabrication. Each portion may independently be the same or different in such characteristics as composition and thickness. Portions having different compositions and/or thicknesses may be used to create, as examples, one or more abrupt change in composition, one or more step-wise change in composition, one or more gradation of compositions, and/or alternating compositions. When heat is applied, e.g., when an EBC system is sintered, the components in one portion may flow into adjacent portion(s) to a greater or lesser degree, e.g., complete or partial mixing of components between portions may occur.

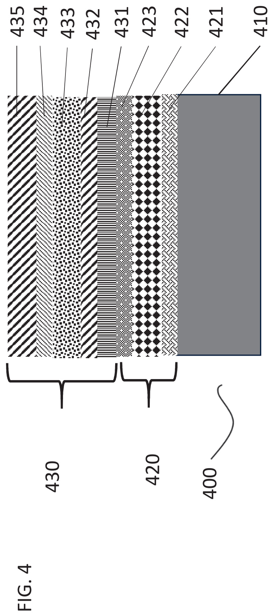

For example, a first portion of a coat (bond or top) may initially comprise a first composition and thickness, while a second portion of the coat may initially comprise a second composition and thickness, and a third portion of the coat may initially comprise a third composition and thickness, and so on. Compositions and thicknesses may vary independently of one another. A non-limiting example of such an arrangement is illustrated schematically in FIG. 4, which shows a cross section of exemplary three dimensional EBC system 400. EBC bond coat 420 overlies substrate 410. EBC top coat 430 overlies EBC bond coat 420. EBC bond coat 420 is formed of portions (or layers) 421, 422, and 423. EBC bond coat 430 is formed of portions (or layers) 431, 432, 433, 434, and 435. As illustrated in FIG. 4, portion may independently be the same or different in such characteristics as composition and thickness.

As an example of varying compositions, a first portion of a bond coat may initially comprise a first additive (as non-limiting examples, Sc, Y, Al, Mg, Ba, Ca, B, Na, one or more Lanthanide, such as Yb, one or more Actinide, individually or combinations thereof may be included) or combination of additives, while a second portion of the bond coat may initially comprise a second additive or combination of additives, and a third portion of the bond coat may initially comprise a third additive or combination of additives, and so on.

Fine TM silicate particles and coarse TM silicate particles may each independently be initially present or absent in one or more portion(s) of one or both of the top coat and/or the bond coat. When present, fine TM silicate particles may initially be located throughout the entirety of the bond coat or may initially be located in only one or more portion of the bond coat; and, independently, coarse TM silicate particles may initially be located throughout the entirety of the bond coat or may initially be located in only one or more portion of the bond coat. When present, fine TM silicate particles may initially be located throughout the entirety of the top coat or may initially be located in only one or more portion of the top coat; and, independently, coarse TM silicate particles may initially be located throughout the entirety of the top coat or may initially be located in only one or more portion of the top coat.

For example, initially, one or more portion of a bond coat may comprise one or more fine TM silicate or one or more coarse TM silicate, while another one or more portion of the bond coat may comprise both one or more fine TM silicate and one or more coarse TM silicate, while a yet another portion of the bond coat may comprise neither fine TM silicate nor coarse TM silicate. As yet another example, initially, one or more portion of a top coat may comprise one or more fine TM silicate or one or more coarse TM silicate, while another one or more portion of the top coat may comprise both one or more fine TM silicate and one or more coarse TM silicate, while a yet another portion of the top coat may comprise neither fine TM silicate nor coarse TM silicate. As a specific non-limiting example, initially, a top coat may comprise one or more fine TM silicate throughout its entire thickness, and may comprise one or more coarse TM silicate only in the topmost/outermost approximately one sixth, approximately one fifth, approximately one quarter, approximately one third, or approximately one half of its entire thickness. As a very specific but still non-limiting example, (i) a top coat may initially comprise one or more fine TM silicate throughout its entire thickness, which may be approximately 2 mils (0.05 mm) to approximately 6 mils (0.15 mm), and may initially comprise one or more coarse TM silicate only in its topmost/outermost approximately 1 mil (0.03 m) to 3 mils (0.08 mm); (ii) a bond coat may initially comprise one or more fine TM silicate throughout its entire thickness, which may be approximately 7 mils (0.18 mm) to approximately 13 mils (0.33 mm), and may initially comprise one or more coarse TM silicate only in its topmost/outermost approximately 2 mil (0.05 mm) to 4 mils (0.10 mm); or (iii) both (i) and (ii). As another very specific but still non-limiting example, (i) a top coat may initially comprise one or more fine TM silicate throughout its entire thickness, and may initially comprise one or more coarse TM silicate only in its topmost/outermost approximately one quarter (1/4) to approximately one third (1/3) of its entire thickness; (ii) a bond coat may initially comprise one or more fine TM silicate throughout its entire thickness, and may initially comprise one or more coarse TM silicate only in its topmost/outermost approximately one quarter (1/4) to approximately one third (1/3) of its entire thickness; or (iii) both (i) and (ii).

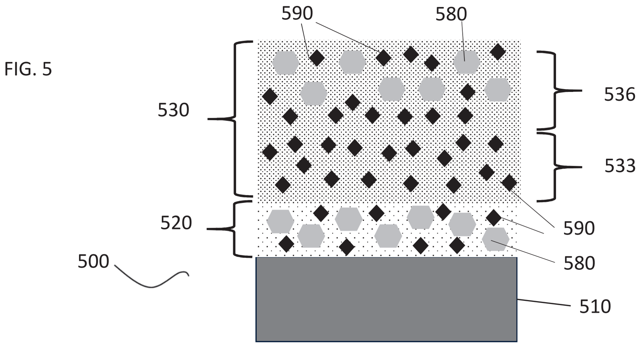

A non-limiting example of an embodiment according to the disclosure is illustrated schematically in FIG. 5. Exemplary schematic arrangement 500 shows a cross section of a region of an exemplary three dimensional EBC system before sintering. EBC bond coat 520 may overlie substrate 510. EBC top coat 530 may overlie EBC bond coat 520. EBC bond coat 520 may comprise particles of coarse TM silicate 580 and/or particles of fine TM silicate 590. Although both particles of coarse TM silicate 580 and particles of fine TM silicate 590 are illustrated in bond coat 520 of FIG. 5, it is contemplated that one may be present and/or the other may be essentially absent from, e.g., not added to, bond coat 520. Although not illustrated, bond coat 520 may comprise more than one portion; as a specific non-limiting example, bond coat 520 may comprise a first portion (such as a bottommost portion) in which particles of fine TM silicate 590 may be present, but particles of coarse TM silicate 580 may be absent or essentially absent, e.g. not added; and a second portion (such as a topmost portion) in which both particles of coarse TM silicate 580 and particles of fine TM silicate 590 may be present. EBC top coat 530 may comprise portions 533 and 536, of which bottommost portion 533 may overlie bond coat 520, and topmost portion 536 may overlie bottommost portion 533. EBC top coat portion 533 may comprise particles of fine TM silicate 590. EBC top coat portion 536 may comprise particles of coarse TM silicate 580 and particles of fine TM silicate 590. Although not illustrated, as another specific non-limiting example, top coat 530 may comprise both particles of coarse TM silicate 580 and particles of fine TM silicate 590 throughout its thickness.

Other embodiments are contemplated. As non-limiting examples, a bond coat may initially comprise more than one portion, each of which may independently vary in composition or have the same composition as one or more other portion; a bond coat or one or more portion thereof may initially lack or essentially lack coarse TM silicate, e.g., no coarse TM silicate may be added to a composition of one or more portion a bond coat; a bond coat or one or more portion thereof may initially lack or essentially lack fine TM silicate, e.g., no fine TM silicate may be added to a composition of one or more portion a bond coat; a bond coat or one or more portion thereof may initially lack or essentially lack TM silicate, e.g., no TM silicate may be added to a composition of one or more portion a bond coat; individually or combinations thereof. As further non-limiting examples, an entirety of a top coat may initially comprise both coarse TM silicate and fine TM silicate; a top coat may initially comprise a single portion; a top coat may initially comprise more than two portions, each of which may independently vary in composition or have the same composition as one or more other portion; a top coat or one or more portion thereof may initially lack or essentially lack coarse TM silicate, e.g., no coarse TM silicate may be added to a composition of one or more portion a top coat; a top coat or one or more portion thereof may initially lack or essentially lack fine TM silicate, e.g., no fine TM silicate may be added to a composition of one or more portion a top coat; a top coat or one or more portion thereof may initially lack or essentially lack TM silicate, e.g., no TM silicate may be added to a composition of one or more portion a top coat; individually or combinations thereof.

As yet further non-limiting examples, a bond coat, a top coat, or both may independently initially comprise: only one type of coarse TM silicate, more than one type of coarse TM silicate, only one type of fine TM silicate, more than one type of TM silicate, or combination(s) thereof. A "type" of TM silicate may refer, for example, (i) to a TM silicate having a particular approximate size, (ii) to a TM silicate comprising a particular chemical composition, such as a particular TM, or (iii) to combination(s) thereof. Still other embodiments are contemplated; for example, any exemplary embodiments of bond coat and top coat may independently be combined.

As discussed hereinabove, during fabrication, during operation, or both, components of one layer may mix together with the components of one or more other layer to various degrees. Such mixing may occur, for example, between two or more layers of a top coat, between two or more layers of a bond coat, between one or more layers of a top coat and one or more layer of a bond coat, or combinations thereof. Accordingly, during fabrication, during operation, or both, components of an EBC top coat and an components EBC bond coat may mix together to various degrees. For example, where a coat, e.g., a bond coat, comprises glass, at sintering temperature, at least a portion of this glass may become liquid and a portion thereof may flow into the other coat, e.g., a top coat. Such mixing may produce, for example, gradients of components and/or may produce localities with components that may be different from surrounding areas. Thus, one or more composition of one or more layer of a top coat, one or more layer of a bond coat, or combinations of layers may change during fabrication, during operation, or both. As used herein, the terms "initial", "initially", and the like may be used to describe a composition of a layer and/or a coat as it is composed prior to fabrication.

Coats of an EBC can be applied to a substrate, e.g., a CMC substrate, via a variety of processes. For example, EBCs can be prepared by thermal spraying such as plasma spraying using powders to form deposited coats on the substrate being treated. Typical thermal spraying processes include air or atmospheric plasma spraying (APS), vacuum plasma spraying (VPS), low pressure plasma spraying (LPPS), shrouded plasma spraying, suspension plasma spraying (SPS), and hybrid forms thereof. As another example, EBC coating systems can be applied via slurry processing.

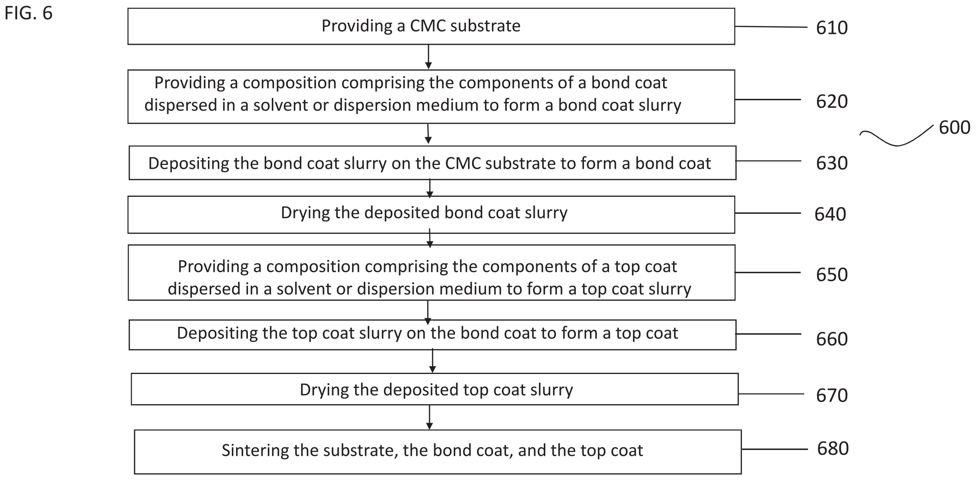

As illustrated in FIG. 6, to form an EBC on a CMC substrate by slurry processing, process 600 may be performed. A CMC substrate may be provided (610). A composition comprising the components of a bond coat dispersed in a solvent or dispersion medium (e.g., an organic solvent) to form a bond coat slurry may be provided (620). The bond coat slurry may then be applied to/deposited on the CMC substrate (630) and dried (or allowed to dry) to remove the solvent/dispersion medium (640). The steps 620, 630, and 640 can optionally be repeated more than one time to increase the thickness of the bond coat, and/or to add layers/portions of bond coat having different compositions; in other words, two or more steps 620, with each having the same or different components, and with each followed by a step 630 and a step 640, may optionally be performed. A composition comprising the components of a top coat dispersed in a solvent or dispersion medium (e.g., an organic solvent) to form a top coat slurry may be provided (650). The top coat slurry may then be applied to/deposited on the bond coat (660) and dried (or allowed to dry) to remove the solvent/dispersion medium (670). The steps 650, 660, and 670 can optionally be repeated more than one time to increase the thickness of the top coat, and/or to add layers/portions of top coat having different compositions; in other words, two or more steps 650, with each having the same or different components, and with each followed by a step 660 and a step 670, may optionally be performed. Each layer may optionally be dried before the next layer is deposited by, for example, heating to approximately 200°C, such as approximately 90°C to approximately 310°C, approximately 100°C to approximately 300°C, approximately 110°C to approximately 290°C, approximately 120°C to approximately 280°C, approximately 130°C to approximately 270°C, approximately 140°C to approximately 260°C, approximately 150°C to approximately 250°C, approximately 160°C to approximately 240°C, approximately 170°C to approximately 230°C, approximately 180°C to approximately 220°C, or approximately 190°C to approximately 210°C. A drying temperature may be maintained for at least approximately 20 minutes, such as at least approximately 5 minutes to at least approximately 35 minutes, at least approximately 10 minutes to at least approximately 30 minutes, or at least approximately 15 minutes to at least approximately 25 minutes. The substrate, bond coat, and the top coat may be sintered (680).

In accordance with the disclosure, (i) at least one portion of the top coat, (ii) at least one portion of the bond coat, or (iii) at least one portion of each of the top coat and the bond coat may initially comprise one or more fine TM silicate and one or more coarse TM silicate; and in at least one portion wherein both the fine TM silicate and the coarse TM silicate are present, the fine TM silicate may form a partial or complete plating on the coarse TM silicate during sintering. Accordingly, the substrate, bond coat, and the top coat may be sintered (680) at a temperature and for a time, wherein the temperature and the time are together sufficient to cause the fine transition metal silicate to partially or completely plate one or more particles of the coarse transition metal silicate, e.g., by sintering to approximately 1,260°C to approximately 1,593°C for approximately 1 hour.

The EBCs of the disclosure may find use, for example, in coating turbomachinery components, such as gas turbine engine components, including, as non-limiting examples, turbine blades, turbine vanes, blade outer air seals (BOAS), BOAS segments, other seals, vane airfoils and platforms therefor, blade airfoils and platforms therefor, and/or combustor liners. The turbomachinery components may comprise CMCs.

EBC's may include "self-healing" glass phases. Self-healing glass may fill microcracks and maintain the oxidation resistance of the EBC. However, as discussed hereinabove, CMAS deposits may form and accumulate on EBCs. At turbomachinery operating temperatures, the CMAS may transform into a glass phase, which glass phase may readily infiltrate and react with the EBC.

The below-described advantages and/or other advantages may result from the compositions and/or processes described herein. However, it should be understood that the disclosure is directed to the described composition and/or processes, regardless of whether the below-described and/or other advantages are achieved.

In some embodiments of this disclosure, management of the dynamics (e.g., glass flow) of these different glasses (e.g., self-healing glass of the EBC system and infiltrating CMAS glass) may be used to maximize the operational lifetime of the EBC system, can cause spallation of the coating, or a combination thereof. In some embodiments, reduction of pooling may therefore reduce oxidation and lengthen (increase) the operational lifespan of the EBC. The operational lifespan of the EBC may be considered to be the length of time before the EBC degrades sufficiently to allow high temperature water vapor to react with the silica of the underlying CMC component causing the CMC component to begin to erode/degrade.

In some embodiments of this disclosure, plating of coarse TM silicate particles with fine TM silicate ("plating reaction") may cause glass, e.g., self-healing glass and/or CMAS, to remain local to plating reaction sites, instead of flowing through the EBC system, as it would without the inclusion of coarse and fine TM silicates. At high temperatures, the glass phase of the EBC (e.g., self-healing glass) may form a large amount of liquid phase, which may pool in one or more location. Pooling may lead to an increased local oxidation rate and spallation of the EBC. Additionally, during CMAS attack, CMAS may tend to pool at the interface between the top coat and the bond coat, which may lead to spallation of the top coat from the bond coat. In some embodiments of this disclosure, inclusion of both fine and coarse TM silicate particles in the top coat may impede CMAS flow within the top coat toward the interface of the top coat with the bond coat, which may retard interfacial failure of the top coat. Inclusion of (i) coarse TM silicate particles in one or more top layer of the bond coat and (ii) fine TM silicate particles in the top coat, may result in a plating effect that may effectively form a physical tie between the bond coat and the top coat, thus decreasing the risk of spallation of the top coat. In some embodiments of this disclosure, plating of coarse TM silicate with fine TM silicate may cause glass to localize in the region of the plated TM silicates, impeding glass flowing and/or pooling. The plated TM silicates may also form a microstructure that may be resistant to the ingress of CMAS.

In some embodiments of this disclosure, an EBC of the disclosure may exhibit a longer operational lifespan as compared to an EBC lacking coarse TM silicate particles partially or completely coated by fine TM silicate particles. The operational lifespan of the EBC may be considered to be the length of time before the EBC degrades sufficiently to allow high temperature water vapor to react with the silica of the underlying substrate, such as an underlying CMC component, causing the underlying substrate to begin to erode/degrade. For example, the operational lifespan of the EBC may be considered to be the length of time before the EBC degrades sufficiently to allow SiC in the underlying substrate (e.g., CMC substrate) to oxidize. Oxidation can be measured by, for example, isothermal and/or cyclic furnace testing in steam and/or dry environments.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A multilayer environmental barrier coating, comprising:
a bond coat (120; 220; 420; 520) and a top coat (130; 230; 430; 530); wherein
(i) at least one portion (421, 422, 423) of the bond coat (120; 220; 420; 520), (ii) at least one portion (431, 432, 433, 434, 435; 533, 536) of the top coat (130; 230; 430; 530), or (iii) at least one portion (421, 422, 423, 431, 432, 434, 435; 533, 536) of each of the bond coat (120; 220; 420; 520) and the top coat (130; 230; 430; 530) comprises one or more fine transition metal silicate (320; 590) and one or more coarse transition metal silicate (310; 580); and
in at least one portion (421, 422, 423, 431, 432, 434, 435; 533, 536) wherein both fine transition metal silicate (320; 590) and coarse transition metal silicate (310; 580) are present, the fine transition metal silicate (320; 590) forms a partial or complete plate on at least one particle of the coarse transition metal silicate (310; 580).

2. The multilayer environmental barrier coating according to claim 1, wherein the bond coat (120; 220; 420; 520) coats a ceramic matrix composite component (110; 210; 410; 510).

3. A method for making a multilayer environmental barrier coating system (100; 200; 400; 500), the method comprising:
providing a substrate (110; 210; 410; 510);
providing a bond coat (120; 220; 420; 520) and a top coat (130; 230; 430; 530), wherein (i) at least one portion of the bond coat (120; 220; 420; 520), (ii) at least one portion (431, 432, 433, 434, 435; 533, 536) of the top coat (130; 230; 430; 530), or (iii) at least one portion (421, 422, 423, 431, 432, 434, 435; 533, 536) of each of the bond coat (120; 220; 420; 520) and the top coat (130; 230; 430; 530) comprises one or more fine transition metal silicate (320; 590) and one or more coarse transition metal silicate (310; 580);
depositing the bond coat (120; 220; 420; 520) on the substrate (110; 210; 410; 510);
depositing the top coat (130; 230; 430; 530) on the bond coat (120; 220; 420; 520); and
sintering the substrate (110; 210; 410; 510), the bond coat (120; 220; 420; 520), and the top coat (130; 230; 430; 530); wherein the sintering causes one or more particles of the fine transition metal silicate (320; 590) to partially or completely plate at least one particle of the coarse transition metal silicate (310; 580).

4. The multilayer environmental barrier coating according to claim 1 or 2 or the method according to claim 3, wherein the sintering comprises (i) heating the substrate (110; 210; 410; 510), the bond coat (120; 220; 420; 520), and the top coat (130; 230; 430; 530) to a temperature of 1,260°C to 1,593°C; (ii) maintaining the top coat (130; 230; 430; 530), the bond coat (120; 220; 420; 520), and the substrate (110; 210; 410; 510) to a temperature of 1,260°C to 1,593°C for at least one hour; or (iii) both (i) and (ii).

5. The method according to claim 3 or 4, wherein (i) at least one portion (421, 422, 423) of the bond coat (120; 220; 420; 520) and (ii) at least one portion (431, 432, 433, 434, 435; 536) of the top coat (130; 230; 430; 530) each comprises one or more fine transition metal silicate (320; 590) and one or more coarse transition metal silicate (310; 580).

6. The method according to any of claims 3 to 5, wherein (i) the coarse transition metal silicate (310; 580) is provided in only a topmost one third (1/3) to one quarter (1/4) of a total thickness of the bond coat (120; 220; 420; 520), (ii) the coarse transition metal silicate (310; 580) is provided in only a topmost one third (1/3) to one quarter (1/4) of a total thickness of the top coat (130; 230; 430; 530), or (iii) both (i) and (ii).

7. The multilayer environmental barrier coating or method according to any preceding claim, wherein (i) a ratio of an initial volume % of particles of the fine transition metal silicate (320; 590) to an initial volume % of particles of the coarse transition metal silicate (310; 580) is from 2:1 to 1:2 in at least one portion (421, 422, 423) of the bond coat (120; 220; 420; 520); (ii) a ratio of an initial volume % of particles of the fine transition metal silicate (320; 590) to an initial volume % of particles of the coarse transition metal silicate (310; 580) is from 12:1 to 7:1 in at least one portion (431, 432, 433, 434, 435; 533, 536) of the top coat (130; 230; 430; 530); or (iii) both (i) and (ii).

8. The multilayer environmental barrier coating or method according to any preceding claim, wherein (i) an initial particle size of the fine transition metal silicate (320; 590) is 0.7 µm to 1.3 µm, (ii) an initial particle size of the coarse transition metal silicate (310; 580) is 5 µm to 115 µm, or (iii) both (i) and (ii).

9. The multilayer environmental barrier coating or method according to any preceding claim, wherein (i) the fine transition metal silicate (320; 590) comprises HfSiO₄, (ii) the coarse transition metal silicate (310; 580) comprises ZrSiO₄, or (iii) both (i) and (ii).

10. The multilayer environmental barrier coating or method according to any preceding claim, wherein the bond coat (120; 220; 420; 520) further comprises one or more of the following additives: Sc, Y, Yb, Al, Mg, Ba, Ca, B, Na, one or more Lanthanide, and one or more Actinide.

11. The multilayer environmental barrier coating or method according to any preceding claim, wherein (i) the bond coat (120; 220; 420; 520) is 7 mils (0.18 m) to 13 mils (0.33 mm) thick, (ii) the top coat is 2 mils (0.05 mm) to 6 mils (0.15 mm) thick, or (iii) both (i) and (ii).

12. The method according to any of claims 3 to 11, wherein the substrate (110; 210; 410; 510) comprises a ceramic matrix composite component (110; 210; 410; 510).

13. A multilayer environmental barrier coating system (100; 200; 400; 500) comprising:
a ceramic matrix composite component (110; 210; 410; 510) coated by the multilayer environmental barrier coating according to claim 1 or 2 or any of claims 4 to 11; wherein
the multilayer environmental barrier coating system (100; 200; 400; 500)is produced by a process comprising:
providing a ceramic matrix composite component (110; 210; 410; 510);
depositing a bond coat (120; 220; 420; 520) on the component (110; 210; 410; 510);
depositing a top coat (130; 230; 430; 530) on the bond coat (120; 220; 420; 520); and
sintering the component (110; 210; 410; 510), the bond coat (120; 220; 420; 520), and the top coat (130; 23; 430; 530), at a temperature and for a time, wherein the temperature and the time are together sufficient to cause the fine transition metal silicate (320; 590) to partially or completely plate at least one particle of the coarse transition metal silicate (310; 580).

14. The multilayer environmental barrier coating system according to claim 13, wherein
(a) as deposited, the bond coat (120; 220; 420; 520) comprises by volume % one or more of (i) 20% to 70% SiC particles, (ii) 15% to 30% SiO₂, (iii) 1% to 10% glass, (iv) 0.5% to 10% of one or more additive, (v) 5% to 25% fine transition metal silicate particles (320; 590), (vi) 0% to 20% coarse transition metal silicate particles (310; 580), or (vii) any combination of (i)-(vi);
(b) as deposited, the top coat (130; 230; 430; 530) comprises by volume % (i) 80% to 100% fine transition metal silicate particles (320; 590), (ii) 0% to 20% coarse transition metal silicate particles (310; 580), or (iii) both (i) and (ii); or
(c) both (a) and (b).

15. The multilayer environmental barrier coating system according to claim 14, wherein (i) the fine transition metal silicate particles (320; 590) comprise HfSiO₄, (ii) the coarse transition metal silicate particles (310; 580) comprise ZrSiO₄, or (iii) both (i) and (ii).
